Europäisches Patentamt

European Patent Office

Office européen des brevets

(11) Veröffentlichungsnummer: **0 077 904**
**B1**

(12) **EUROPÄISCHE PATENTSCHRIFT**

(45) Veröffentlichungstag der Patentschrift:
05.08.87

(21) Anmeldenummer: **82108240.1**

(22) Anmeldetag: **08.09.82**

(51) Int. Cl.⁴: **C 04 B 24/28**

---

(54) **Baustoffe,enthaltend ein Polykondensationsprodukt.**

---

(30) Priorität: **26.10.81 CH 6821/81**

(43) Veröffentlichungstag der Anmeldung:
**04.05.83 Patentblatt 83/18**

(45) Bekanntmachung des Hinweises auf die Patenterteilung:
**05.08.87 Patentblatt 87/32**

(84) Benannte Vertragsstaaten:
**AT BE CH DE FR GB IT LI NL SE**

(56) Entgegenhaltungen:
**EP - A - 0 059 353**
**DE - A - 3 107 853**
**FR - A - 2 150 493**
**FR - A - 2 287 459**
**FR - A - 2 386 568**

**CHEMICAL ABSTRACTS, Band 86, 1977, Seite 336, Nr. 77721u, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **Sika AG, vorm. Kaspar Winkler & Co., Tüffenwies 16-22, CH-8048 Zürich (CH)**

(72) Erfinder: **Bürge, Theodor, Waldrütistrasse 3, CH-8954 Geroldswil (CH)**
Erfinder: **Widmer, Jürg, Limmattalstrasse 3, CH-8049 Zürich (CH)**
Erfinder: **Meyer, Theodor, Rosenstrasse 36, CH-8105 Regensdorf (CH)**
Erfinder: **Sulser, Ulrich, Hönggerstrasse 12, CH-8102 Oberengstringen (CH)**

(74) Vertreter: **Blum, Rudolf Emil Ernst et al, c/o E. Blum & Co Patentanwäite Vorderberg 11, CH-8044 Zürich (CH)**

## Beschreibung

Es ist bereits bekannt, Natriumsalze sulfonierter Melamin-Formaldehydharze anorganischen Baustoffen zuzusetzen, um deren Verarbeitbarkeit und Festigkeitsentwicklung zu verbessern.

Die bis jetzt bekannten Harze können jedoch für die Praxis nicht in der gewünschten hohen Konzentration hergestellt werden. Sie weisen bereits bei einem Feststoffgehalt von über 35% eine unbrauchbar hohe Viskosität auf, welche beim Lagern noch zunimmt. Als Salze mehrwertiger Kationen sind diese Harze nicht einsetzbar, da sie unlöslich sind. Bedingt durch die hohe Dosierung dieser Harzlösungen von 1 bis 5%, bezogen auf das Bindemittelgemisch, gelangen hohe Anteile an Alkalien in den Baustoff. Der negative Einfluss von Alkalien auf die Festigkeitsentwicklung, das Schwinden und vor allem die Reaktionsfähigkeit mit gewissen silikatischen Zuschlagstoffen ist bekannt. Aus diesem Grunde hat der Sachverständigenausschuss «Betonzusatzmittel» in Deutschland den Alkaligehalt für Zusatzmittel bei Gefahr schädlicher Alkalireaktionen im Beton auf max. 0,02% $Na_2O$, bezogen auf das Bindemittel, festgelegt.

Bekannte Prüfvorschriften sind z.B. in USA die ASTM Normen C 295, C 227 und C 289.

Der vorliegenden Erfindung liegt deshalb die Aufgabe zugrunde, hochkonzentrierte, niederviskose, den Wassergehalt vermindernde, wasserlösliche und lagerfähige Zusatzmittel zur Verfügung zu stellen, die auch in alkalifreier Form eingesetzt werden können. Mit den erfindungsgemässen Polykondensationsprodukten können die Verarbeitbarkeit und die physikalischen und chemischen Eigenschaften von Baustoffen verbessert werden.

Die Kondensationsprodukte können erfindungsgemäss auch Lösungen ihrer Salze mehrwertiger Kationen, z.B. des Calciums eingesetzt werden, wodurch alle negativen Einflüsse der Alkalien eliminiert werden. Die erfindungsgemässen Harze können daher ohne Bedenken als Zusatzmittel zu Baustoffen mit alkalireaktiven Zuschlagstoffen verwendet werden.

Die nachfolgenden Beispiele sollen die Herstellung und die Wirkung der erfindungsgemässen Kondensationsprodukte illustrieren, wenngleich die angegebenen absoluten molaren Mengen nicht unter Anspruch 1 fallen.

Beispiel 1

256 g (2,64 Mole) Sulfaminsäure in 200 g Wasser werden portionenweise mit 105 g Calciumhydroxid versetzt. Danach werden 112 g (0,88 Mol) Melamin und 435 g (5,4 Mole) 37%-iges Formalin zugegeben. Die Lösung wird noch 40 Minuten auf 75°C erwärmt und dann mit Sulfaminsäure auf einen pH-Wert von 5,8 eingestellt. Anschliessend wird 1 Stunde auf 80°C erwärmt und dann mit Calciumhydroxid ein pH-Wert von 9 eingestellt.

Man erhält eine klare, farblose Lösung mit einem Feststoffgehalt von 53% und einer Viskosität von 55 Centipoise.

Beispiel 2

128 g (1,32 Mole) Sulfaminsäure in 100 g Wasser werden mit 112 g 50%-iger Natronlauge versetzt und dann 56 g (0,44 Mol) Melamin und anschliessend 216 g (2,66 Mole) 37%-iges Formalin zugegeben. Nachdem sich eine klare Lösung gebildet hat, wird nach ½ Stunden auf 75°C erwärmt und dann die Lösung mit Sulfaminsäure auf einen pH-Wert von 5,8 eingestellt und eine Stunde auf 80°C erwärmt. Nach dem Abkühlen auf 20°C wird mit 50%-iger Natronlauge ein pH-Wert zwischen 8 und 9 eingestellt.

Die klare, farblose Lösung besitzt einen Trockengehalt von 50% und eine Viskosität von 60 Centipoise.

Beispiel 3

256 g (2,64 Mole) Sulfaminsäure und 138 g (1,0 Mol) Salicylsäure in 300 g Wasser werden portionenweise mit 142 g Calciumhydroxid versetzt. Anschliessend werden 112 g (0,44 Mol) Melamin und 590 g (7,4 Mole) 37%-iges Formalin zugegeben. Sobald eine klare Lösung entstanden ist, wird noch 2 Stunden auf 80°C erwärmt. Danach wird mit Sulfaminsäure ein pH-Wert von 5,5 eingestellt und anschliessend die Lösung zwei Stunden auf 85°C erwärmt. Nach dem Abkühlen auf 20°C wird durch Zugabe von Calciumhydroxid ein pH-Wert von 9,0 eingestellt. Die klare, farblose Lösung besitzt einen Feststoffgehalt von 55% und eine Viskosität von 70 Centipoise.

Beispiel 4

256 g (2,64 Mole) Sulfaminsäure und 94,1 g (1,0 Mol) Phenol in 300 g Wasser werden portionenweise mit 105 g Calciumhydroxid versetzt. Danach werden 112 g (0,88 Mol) Melamin und 671 g (8,4 Mole) 37%-iges Formalin zugegeben. Die Lösung wird 3 Stunden auf 80°C erwärmt, anschliessend mit Sulfaminsäure auf pH = 5,0 eingestellt und noch 3 Stunden bei 85°C gehalten. Nach dem Abkühlen auf 20°C wird durch Zugabe von Calciumhydroxid auf pH = 9,0 eingestellt.

Die klare, braune Lösung besitzt einen Feststoffgehalt von 52% und eine Viskosität von 60 Centipoise.

Beispiel 5

Gemäss ANS/ASTM Standard C 227 wurden Mörtelprismen hergestellt für die Prüfung der potentiellen Alkali-Aggregat-Reaktion. In Abänderung obiger Norm wurden jedoch Prismen 4 cm × 4 cm × 16 cm und ein Mörtel aus 1 Gew. Teil Portlandzement und 3 Gew. Teilen Sand 0–6 mm Korngrösse verwendet. Beim verwendeten Zuschlagstoff handelte es sich um alkalireaktiven Sand norddeutscher Herkunft. Die Expansionsmessungen wurden an je drei Mörtelprismen durchgeführt.

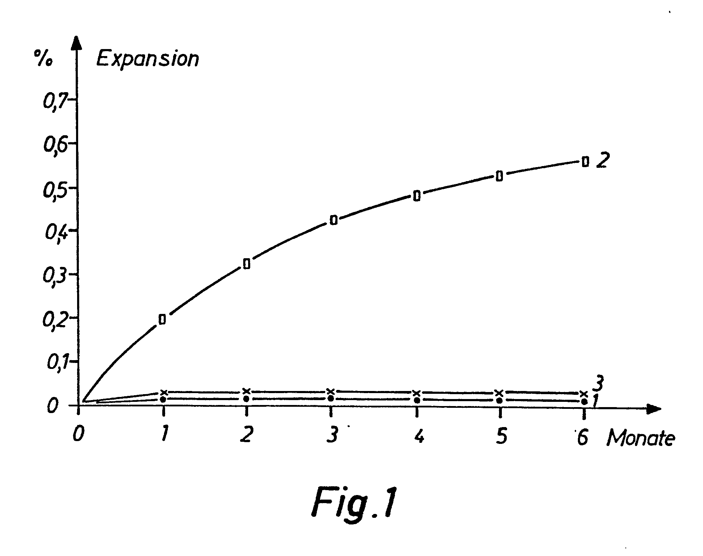

Miteinander verglichen wurden die Expansionswerte eines Mörtels ohne Zusatz (Kurve 1, Figur 1), eines ein handelsübliches Natriumsalz eines sulfonierten Melamin Formaldehydharzes enthaltenden Mörtels (Kurve 2) und eines Mörtels der ein erfindungsgemässes Calciumsalz gemäss Beispiel 1 enthält (Kurve 3).

Gemäss ASTM Specification C 33 ist eine Expansion nach 3 Monaten von über 0,05% resp. nach 6 Monaten von über 0,10% ein Hinweis auf eine Alkali-Silikat-Reaktion, welche zu einer Zerstörung des Baustoffes führen kann.

Mit dem erfindungsgemässen Calciumsalz wurde die gefährliche Limite nicht erreicht, mit dem Natriumsalz eines handelsüblichen sulfonierten Melamin-Formaldehydharzes um das fünffache überschritten.

Beispiel 6
Betonversuche (Beispiel 1 bis 4)
Beton gemäss SIA Norm 162, Zementgehalt 300 kg/m³, W/Z 0,450
Dosierung des erfindungsgemässen Zusatzes 1%

| Erfindungsgemässer Zusatz | Plastizität Ausbreitmass cm | Druckfestigkeiten in N/mm² | | | |
|---|---|---|---|---|---|
| | | 1 Tag | 3 Tage | 7 Tage | 28 Tage |
| ohne | 34 | 5,2 | 12,8 | 26,3 | 33,9 |
| nach Beispiel 1 | 53 | 11,3 | 20,7 | 29,5 | 43,0 |
| nach Beispiel 2 | 52 | 10,5 | 20,0 | 29,4 | 42,1 |
| nach Beispiel 3 | 54 | 9,2 | 18,6 | 26,4 | 42,3 |
| nach Beispiel 4 | 54 | 9,7 | 18,8 | 27,8 | 41,0 |

## Patentansprüche

1. Baustoffe aus wenigstens einem anorganischen Bindemittel, beispielsweise Zement, Kalk und Gips, wenigstens einem Zuschlagstoff und Wasser, dadurch gekennzeichnet, dass er ein Polykondensationsprodukt aus

a) 3 bis 6 Molen Sulfaminsäure ($H_2N-SO_3H$) als solche oder in Form eines ihrer Salze,

b) 3 bis 10 Molen Formaldehyd und gegebenenfalls

c) bis zu 1 Mol Melamin und 0 bis 2 Mol wenigstens einer phenolischen Verbindung in einer Menge von 0,1 bis 20 Gew.-%, bezogen auf das Bindemittel, enthält.

2. Baustoff nach Anspruch 1, dadurch gekennzeichnet, dass die Salze der Sulfaminsäure die Ammonium-, Alkalimetall- oder Erdalkalimetall-Salze, vorzugsweise die Calciumsalze, sind.

3. Baustoff nach einem der Ansprüche 1 bis 2, dadurch gekennzeichnet, dass die Aldehydkomponente b) Formaldehyd und/oder Paraformaldehyd und/oder ein Formaldehyd bildendes Material ist.

## Claims

1. Building material of at least one inorganic binder, for example cement, chalk and gypsum, at least one additive and water, characterized in that it contains a polycondensation product of

a) 3 to 6 moles of sulfamic acid ($H_2N-SO_3H$) as such or in the form of one of its salts,

b) 3 to 10 moles of formaldehyde and occasionally

c) up to 1 mol of melamine and 0 to 2 moles of at least one phenolic compound in an amount from 0,1 to 20 percent by weight, referred to the binder.

2. Building material according to claim 1, characterized in that the salts of the sulfamic acid are the ammonium-, alkali metal- or alkaline earth metal salts, preferably the calcium salts.

3. Building material according to one of claims 1 to 2, characterized in that the aldehyde component b) is formaldehyde and/or paraformaldehyde and/or a formaldehyde forming material.

## Revendications

1. Matériau de construction, comprenant au moins un liant inorganique tel que du ciment, de la chaux, du gypse, etc., au moins un agrégat et de l'eau, caractérisé en ce qu'il contient un produit de polycondensation de

a) 3 à 6 moles d'acide sulfamique ($H_2N-SO_3H$) ou d'un sel de cet acide,

b) 3 à 10 moles d'aldéhyde formique et éventuellement de

c) jusqu'à 1 mole de mélamine et de 0 à 2 moles d'au moins un composé phénolique en une proportion comprise entre 0,1 et 20% en poids par rapport au liant.

2. Matériau de construction suivant la revendication 1, caractérisé en ce que les sels de l'acide sulfamique sont choisis parmi les sels d'ammonium, de métaux alcalins et de métaux alcalino-terreux, les sels de calcium étant préférés.

3. Matériau de construction suivant l'une des revendications 1 et 2, caractérisé en ce que la composante aldéhydique b) est de l'aldéhyde formique ou(et) du paraformaldéhyde ou(et) un produit formant du formaldéhyde.

Fig.1